# EUROPÄISCHE PATENTANMELDUNG

(11) **EP 2 413 532 A1**
(43) Veröffentlichungstag der Anmeldung: **01.02.2012**
(21) Anmeldenummer: 11005930.0
(22) Anmeldetag: 20.07.2011
(51) Int. Cl.: H04L 12/10, G05B 19/042, G05B 19/418, H02H 9/00

(54) **Feldgerät einer Prozessautomatisierungsanlage mit zwei eigensicheren Stromversorgungseinrichtungen**

(30) Priorität: 30.07.2010 DE 102010032831
(71) Anmelder: ABB Technology, 8050 Zürich (CH)
(72) Erfinder: Müller, Harald U., 36043 Fulda (DE); Maret, Yannick, Dr., 5405 Dättwil (CH)
(74) Vertreter: Marks, Frank

(57) **Zusammenfassung**

Die Erfindung betrifft ein Feldgerät (1) einer Prozessautomatisierungsanlage, mit mindestens einer ersten eigensicheren Stromversorgungseinheit (3), die in einem integrierten Speicherelement (5) lokal gespeicherte elektrische Energie zur Stromversorgung einer Elektronikeinheit (2) zwecks Prozesssteuerung bereitstellt. Zur bedarfsgerechte Stromversorgung eigensicherer Feldgeräte (1) aus lokal gespeicherter elektrischer Energie wird vorgeschlagen, dass daneben mindestens eine weitere eigensichere Stromversorgungseinheit (4) integriert ist, die durch eine lokal erneuerbare elektrische Energie beieitstellende Stromerzeugungseinheit (6) gespeist ist.

## Beschreibung

Die Erfindung betrifft ein Feldgerät einer Prozessautomatisierungsanlage, mit mindestens einer ersten eigensicheren Stromversorgungseinheit, die in einem integrierten Speicherelement lokal gespeicherte elektrische Energie zur Stromversorgung einer Elektronikeinheit zwecks Prozesssteuerung bereitstellt.

Das Einsatzgebiet der Erfindung erstreckt sich auf prinzipiell alle Feldgeräte als technische Einrichtungen im Bereich der Automatisierungstechnik, die mit einem Produktionsprozess in direkter Beziehung stehen. Derartige Feldgeräte können sowohl Aktoren, wie Stellglieder oder Ventile, als auch Sensoren, wie Messumformer, in der Fabrik- und Prozessautomation sein. Die Feldgeräte sind mit einem übergeordneten Steuerungssystem, meist über einen Feldbus, verbunden. Hierüber werden die Daten ausgewertet und dienen dann zur Regelung, Steuerung und weiteren Verarbeitung. Häufig verwendete Kommunikationsstandards für Feldbus sind CAN, HART, PROFIBUS oder können auch auf Basis von ETHERNET, Profinet, IP ausgebildet sein. Feldgeräte, insbesondere 4-20 mA Geräte, aber auch solche mit Feldbus, welche aus der angeschlossenen Busleitung energieversorgt werden, haben nur begrenzte elektrische Energie zur Verfügung. Dem stehen steigenden Anforderungen hinsichtlich des elektrischen Energiebedarfs gegenüber. Denn neue in Feldgeräte zu integrierende Funktionsmodule, wie beispielsweise Datenfunkmodule, erfordern zusätzliche elektrische Energie.

Aus der DE 10 2008 033 048 A1 geht ein Feldgerät einer Prozessautomatisierungsanlage hervor, welches mit einer Einrichtung zur lokalen Gewinnung elektrischer Energie ausgestattet ist. Zusätzlich oder alternativ zur elektrischen Energieversorgung bei einem Zwei-Leiter-Bus wird lokal im Feldgerät elektrische Energie durch Umwandlung eines dort anliegenden Betriebsdrucks durch eine Piezo-Elementanordnung erzeugt. Die Piezo-Elementanordnung ist als ein federnd gelagerter schwingfähiger piezo-elektrischer Flächenwandler ausgebildet. Diese Lösung zur lokalen elektrischen Energieerzeugung direkt im Feldgerät setzt jedoch voraus, dass als Energiequelle der Betriebsdruck stets zur Verfügung steht. Dies schränkt den Anwendungsbereich dieser technischen Lösung auch auf druckbetriebene Feldgeräte ein.

Aus der DE 200 238 65 U1 geht eine weitere technische Lösung zur lokalen Energieversorgung von Feldgeräten hervor, bei welcher eine zusätzliche Stromversorgungseinheit vorgesehen ist, die über eine Servicebuchse mit dem Feldgerät elektrisch verbindbar ist. Die Stromversorgungseinheit weist mindestens eine Batterie auf. Es wird ferner vorgeschlagen, stattdessen beispielsweise auch Solarzellen, ein Peltier-Element, einen Vibrationsenergiewandler oder Rotationsenergiewandler zu verwenden.

Nachteilhaft bei der Verwendung einer herkömmlichen Batterie erweist sich die Tatsache, dass diese bei Verbrauch auszutauschen ist oder - falls als Akkumulator ausgebildet - wieder aufzuladen ist. Es ist dann auch eine Batteriestatusanzeige oder dergleichen erforderlich. Dagegen nutzen Solarzellen und die übrigen genannten Stromversorgungsmittel zwar lokal erneuerbare Energie durch photovoltaische oder elektrothermische oder elektromechanische Umwandlung, allerdings ist die Nutzung dieser Energieformen auf das Vorhandensein von Licht, Wärme oder Schwingungen angewiesen. Da Feldgeräte oftmals in explosionsgefährdeten Umgebungen betrieben werden müssen, ist daneben auch darauf zu achten, dass diese Feldgeräte selbst und insbesondere deren Stromversorgungseinheiten nach den einschlägigen Schutzvorschriften eigensicher ausgebildet sind.

Es ist daher die Aufgabe der vorliegenden Erfindung, eigensichere Feldgeräte für eine Prozessautomatisierungsanlage zu schaffen, welche eine bedarfsgerechte Stromversorgung aus lokal gespeicherter elektrischer Energie gewährleisten.

Die Aufgabe wird ausgehend von einem Feldgerät gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das Feldgerät neben einer ersten eigensichere Stromversorgungseinheit mit integriertem Speicherelement zur lokal gespeicherten Stromversorgung einer integrierte Elektronikeinheit zur Prozesssteuerung oder dergleichen auch über mindestens eine weitere eigensichere Stromversorgungseinheit verfügt, die durch eine lokal erneuerbare elektrische Energie bereitstellende Stromversorgungseinheit gespeist ist.

Der Vorteil der erfindungsgemäßen Lösung liegt insbesondere darin, dass ein mit hoher elektrischer Kapazität aber sich über die Lebenszeit verbrauchendes Speicherelement zur Stromversorgung ergänzbar ist mit einer weiteren Stromerzeugungseinheit, die beispielsweise Licht-, Wärme- oder Schwingungsenergie lokal in elektrische Energie umzuwandeln vermag, um hierdurch vorzugsweise primär die Stromversorgung des Feldgeräts zu übernehmen.

Die erfindungsgemäße Lösung soll also vorzugsweise so betrieben werden, dass die Stromversorgung aus lokal erneuerbarer Energie Priorität vor der Stromversorgung aus dem sich verbrauchenden Speicherelement besitzt. Zu diesem Zweck wird vorgeschlagen, elektrische Umschaltmittel vorzusehen, die während des normalen Betriebs die weitere eigensichere Stromversorgungseinheit in Priorität vor der ersten eigensicheren Stromversorgungseinheit auf die Elektronikeinheit aufzuschaltet. Diese elektrischen Umschaltmittel sorgen dafür, dass die weitere eigensichere

Stromversorgungseinheit, welche aus lokal zur Verfügung stehender erneuerbarer Energie gespeichert ist, so lange die Stromversorgung übernimmt, wie auch die erneuerbare Energie, beispielsweise Sonnenlicht, zur Verfügung steht. Eine Umschaltung auf die erste eigensichere Stromversorgungseinheit mit dem Speicherelement erfolgt dann, wenn die erneuerbare Energie, beispielsweise während der Nacht, vorübergehend nicht mehr zur Verfügung steht. Entsprechend lässt sich dieser Erfindungsgedanke auch auf Wärmeenergie oder mechanische Schwingungsenergie oder dergleichen als erneuerbare Energiequellen übertragen.

Um erforderlichenfalls auch ein verbrauchtes Speicherelement austauschen oder wiederaufladen zu können, ist dieses demontiernbar aber eigensicher im Feldgerät untergebracht. Die Eigensicherheit ist eine technische Eigenschaft eines Gerätes oder Systems, die aufgrund spezieller Konstruktionsprinzipien sicherstellt, dass selbst im Fehlerfall kein unsicherer Zustand auftritt. Dies kann durch Sollbruchstellen, besondere Stromquellen oder andere elektronische Maßnahmen erreicht werden, so dass die gefährliche Situation nicht entstehen kann. Der Fehlerfall beschreibt Situationen, für die ein Risiko besteht. Beispielsweise ist die Möglichkeit der Funkenbildung, beim Schließen eines elektrischen Stromkreises, nur innerhalb explosionsgefährdeter Bereiche risikobehaftet. In explosionsgefährdeten Bereichen werden für Aufgaben der Mess- und Regeltechnik elektrische Geräte in der Zündschutzart Eigensicherheit eingesetzt. In diesen Geräten kann durch eine Begrenzung von Strom und Spannung keine zündfähige Energie auftreten. Das bedeutet, dass eine mögliche Funkenbildung keine Explosion von explosionsfähigen Brennstoff-Luftgemischen oder dergleichen auslösen kann.

Durch die erfindungsgemäße Lösung ist das Speicherelement - wenn überhaupt - erst nach sehr langen Betriebszyklen auszutauschen. Es wird vorgeschlagen, durch elektrische Umschaltmittel sicherzustellen, dass während eines Austauschs der ersten eigensicheren Stromversorgungseinheit mit dem Speicherelement die Stromversorgung der Elektronikeinheit überbrückend durch die weitere eigensichere Stromversorgungseinheit mit der Stromerzeugungseinheit durch lokal erneuerbare elektrische Energie übernommen wird. Gegebenenfalls wird hierin zusätzlich ein elektrischer Energiepuffer mit geringer Kapazität integriert, um die Stromversorgung während des kurzen Überbrückungszeitraumes selbst dann sicherzustellen, wenn die erneuerbare Energiequelle eventuell nicht zur Verfügung stellt, beispielsweise bei einem Solarelement während der Nacht.

Die Stromerzeugungseinheit der weiteren eigensicheren Stromversorgungseinheit ist vorzugsweise als ein photovoltaischer Wandler, also ein Solarelement, oder als ein elektrothermischer Wandler, beispielsweise ein Peltier-Element, ausgebildet. Es ist natürlich auch möglich, andere erneuerbare Energiearten über entsprechende Wandler zu verwenden, sofern diese je nach Einsatzfall des Feldgeräts in der Lage sind, ausreichende elektrische Energie zu liefern.

Zur zusätzlichen Erhöhung der Eigensicherheit wird vorgeschlagen, dass auch die den beiden Arten der erfindungsgemäßen eigensicheren Stromversorgungseinheiten nachfolgende Elektronikeinheit des Feldgeräts, welche im Wesentlichen die lokalen Steuerungsfunktionen übernimmt, eine zusätzliche eigensichere elektronische Schaltung aufweist, die einen Rückschlagstromschutz und/oder eine Strombegrenzung und/oder eine Spannungsbegrenzung umfasst.

Diese eigensichere elektronische Schaltung der Elektronikeinheit umfasst gemäß einer bevorzugten Ausführungsform mindestens zwei je zweipolige Eingänge für jede eigensichere Stromversorgungseinheit, in denen je ein Rückstromschutzelement zur Verhinderung eines Stromrückflusses in die nicht-explosionsgeschützte Umgebung nachgeschaltet ist, und die nachfolgend elektrisch zusammengeführt einem gemeinsamen Strombegrenzungselement sowie Spannungsbegrenzungselement zugehen, ehe die Betriebsspannung über einen zweipoligen Ausgang der restlichen Elektronikeinheit zur Verfügung gestellt wird. Diese der Elektronikeinheit vorgeschaltete eigensichere Schaltung schafft somit unter Einsatz weniger elektronischer Bauelemente einen hohen Grad an Eigensicherheit.

Zur Gewährleistung der Eigensicherheit der das Speicherelement aufweisenden ersten eigensicheren Stromversorgungseinheit wird vorgeschlagen, dass diese mit einer eigenen eigensicheren elektronischen Schaltung ausgestattet ist, welche ebenfalls den vorstehend für die Elektronikeinheit genannten Funktionsumfang besitzt.

Gemäß einer bevorzugten Ausführungsform wird dieser Funktionsumfang dadurch erreicht, dass die Schaltung der ersten eigensichere Stromversorgungseinheit ein mit dem Speicherelement in Reihe geschaltetes Strombegrenzungselement sowie ein Rückstromschutzelement in Richtung Ausgang umfasst. Ein zweipoliger Ausgang ist zur elektrischen Verbindung mit dem korrespondierenden Eingang der Elektronikeinheit des Feldgeräts vorgesehen.

Auch die die lokal erneuerbare elektrische energiebereitstellende weitere eigensichere Stromversorgungseinheit sollte mit diesem Funktionsumfang zur Gewährleistung einer Eigensicherheit ausgestattet sein. Es wird vorgeschlagen, eine elektronische Schaltung zur Steuerung der Ausgangsspannung einzusetzen, um diese abhängig von der erzeugbaren Leistung der Stromerzeugungseinheit anzupassen.

Gemäß einer bevorzugten Ausführungsform umfasst die elektronische Schaltung ein mit der Stromerzeugungseinheit in Reihe geschaltetes Strombegrenzungselement und ein Rückstromschutzelement zum Ausgang hin sowie eine spezielle Steuereinheit zur Anpassung der von der Stromerzeugungseinheit erzeugten Energie an die Lastleistung der nachfolgenden Schaltung.

Die Kombination der beiden Arten von eigensicheren Stromversorgungseinheiten im Rahmen der erfindungsgemäßen Lösung gewährleistet die Eigensicherheit gemäß der zu beachtenden Standards. Zusätzlich kann auch eine eigensichere Stromversorgungseinheit ausgetauscht werden, ohne dass das Feldgerät hierbei ausfällt, wobei auch die Eigensicherheit während des Austauschs gewährleistet bleibt. Derartige Standards zur Gewährleistung von Eigensicherheit in explosiven Umgebungen sind beispielsweise FM, CSA, ATEX, IECEX. Durch die erfindungsgemäße Lösung ist nicht nur jede Stromversorgungseinheit selbst und auch die Elektronikeinheit des Feldgeräts für sich eigensicher, sondern auch die Kombination dieser Baueinheiten und somit das Feldgerät als ganzes. Hierbei sind die eigensicheren Stromversorgungseinheiten jeweils innerhalb der explosiven Umgebung ohne Gefahr demontierbar. Da mehrere eigensichere Stromversorgungseinheiten unterschiedlicher Art die Stromversorgung übernehmen, kann während des Austauschs einer der eigensicheren Stromversorgungseinheiten im Reparaturfall die volle Funktionalität des Feldgerätes erhalten bleiben. Während des normalen Betriebes wird jedoch die eigensichere Stromversorgungseinheit, welche die elektrische Energie aus lokal zur Verfügung stehender erneuerbarer Energie gewinnt, mit Priorität eingesetzt.

Im Gesamtrahmen des Feldgeräts bewirkt die Gesamtheit der eigensicheren Einheiten hinsichtlich der Rückstromschutzelemente, dass die Summe aller Ströme oder Spannungen aller eigensicheren Einheiten unterhalb des durch den Standard vorgegebenen Grenzwerts bleiben. Dies gilt auch hinsichtlich der Kriechstromabstände, welche durch den Standard vorgegeben sind.

Weitere die Erfindung verbessernde Maßnahmen werden nachstehend gemeinsam mit der Beschreibung eines bevorzugten Ausführungsbeispiels anhand der Figuren näher dargestellt. Es zeigen:
- Figur 1: ein Blockschaltbild eines Feldgeräts mit zwei eigensicheren Stromversorgungseinheiten unterschiedlicher Art,
- Figur 2: eine eigensichere elektronische Schaltung für die Elektronikeinheit des Feldgeräts,
- Figur 3: eine eigensichere elektronische Schaltung der ersten eigensicheren Stromversorgungseinheit des Feldgeräts,
- Figur 4: eine eigensichere elektronische Schaltung der weiteren eigensicheren Stromversorgungseinheit des Feldgeräts,
- Figur 5: eine elektronische Schaltung einer Kombination mit zwei eigensicheren Stromversorgungseinheiten und einer eigensicheren Schaltung der Elektronikeinheit nach einer ersten Ausführungsform, und
- Figur 6: eine elektronische Schaltung einer Kombination mit zwei eigensichere Stromversorgungseinheiten und einer eigensichere Schaltung der Elektronikeinheit gemäß einer zweiten Ausführungsform.

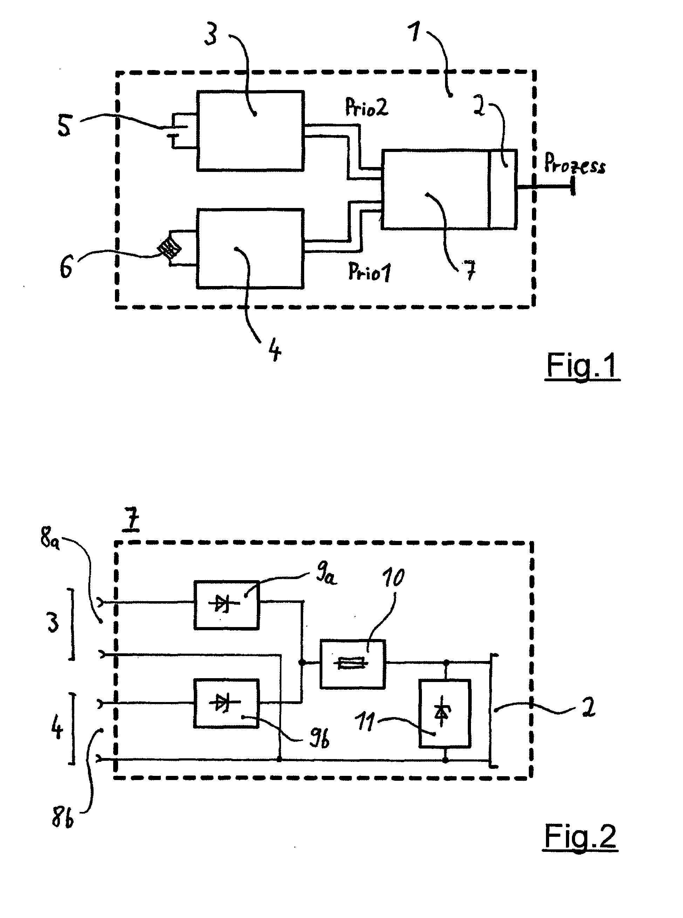

Gemäß Fig. 1 umfasst ein Feldgerät 1 einer - nicht weiter dargestellten - Prozessautomatisierungsanlage eine Elektronikeinheit 2 zur Prozesssteuerung, welche die hierfür erforderliche elektrische Betriebsenergie sowohl von einer ersten eigensicheren Stromversorgungseinheit 3 als auch von einer weiteren eigensicheren Stromversorgungseinheit 4 erhält. Während die erste eigensichere Stromversorgungseinheit 3 die elektrische Betriebsenergie ausgehend von einem integrierten Speicherelement 5, einem elektrischen Akkumulator, bereitstellt, besitzt die weitere eigensichere Stromversorgungseinheit 4 eine Stromerzeugungseinheit 6, die als photovoltaischer Wandler lokal zur Verfügung stehende Lichtenergie in elektrische Energie umformt. Bei der elektrischen Energieversorgung besitzt die weitere eigensichere Stromversorgungseinheit 4 Priorität vor der ersten eigensicheren Stromversorgungseinheit 3 mit dem Speicherelement 5.

Gemäß Fig. 2 weist die Elektronikeinheit 2 - welche hier nur eingangsseitig dargestellt ist - eine vorgeschaltete eigensichere elektronische Schaltung 7 auf, welche je einen zweipoligen Eingang 8a und 8b für je eine eigensichere Stromversorgungseinheit 3 bzw. 4 besitzt. Jedem der Eingänge 8a und 8b ist ein Rückstromschutzelement 9a bzw. 9b zur Verhinderung eines Stromrückflusses in die nicht-explosionsgeschützte Umgebung nachgeschaltet. Nach Zusammenführung der beiden Eingänge 8a und 8b ist ein gemeinsames Strombegrenzungselement 10 in den Stromfluss integriert, dem ein Spannungsbegrenzungselement 11 folgt. Schließlich gelangt die elektrische Betriebsspannung nach der eigensicheren Schaltung 7 über einen zweipoligen Ausgang an die restliche Elektronikeinheit 2 des Feldgeräts 1.

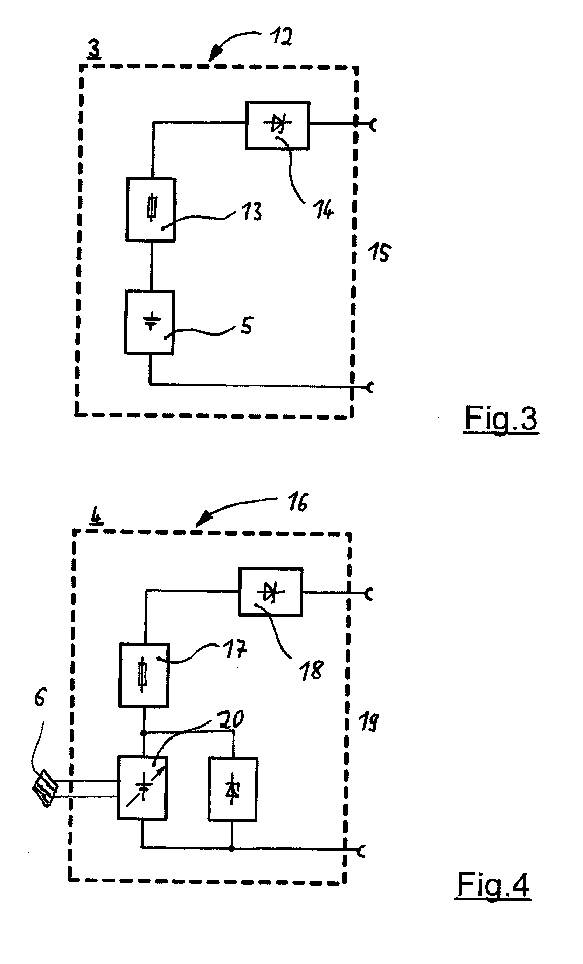

Gemäß Fig. 3 umfasst die erste eigensichere Stromversorgungseinheit 3 das Speicherelement 5 und weist eine eigene eigensichere elektronische Schaltung 12 auf. Die eigene eigensichere elektronische Schaltung 12 der ersten eigensichere Stromversorgungseinheit 3 besteht aus einem in Reihe zum Speicherelement 5 geschalteten Strombegrenzungselement 13 sowie einem nachfolgenden Rückstromschutzelement 14 zum zweipoligen Ausgang 15 hin.

Die in Fig. 4 dargestellte die lokal erneuerbare elektrische Energie bereitstellende weitere eigensichere Stromversorgungseinheit 4 besitzt eine elektronische Schaltung 16 zur Steuerung der Ausgangsspannung. Kernelement ist eine Steuereinheit 20 zur Anpassung der von der eigensichere Stromversorgungseinheit 4 erzeugten Energie an die Lastleistung der - hier nicht weiter dargestellten - nachfolgenden Schaltung 7 der Elektronikeinheit 2, die über einen zweipoligen Ausgang 19 angeschlossen ist. Die Schaltung 16 umfasst weiterhin ein mit der Stromerzeugungseinheit 6 in Reihe geschaltetes Strombegrenzungselement 17 sowie ein Rückstromschutzelement 18 zur Herstellung der Eigensicherheit.

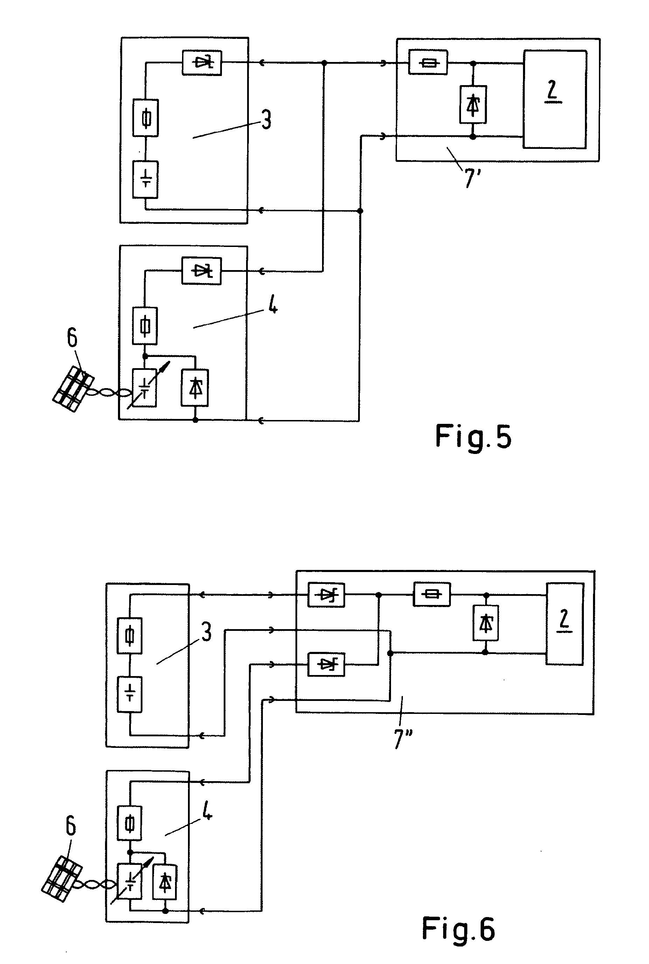

In Fig. 5 ist eine Kombination der ersten eigensicheren Stromversorgungseinheit 3 mit der weiteren eigensicheren Stromversorgungseinheit 4 dargestellt, die an eine modifizierte eigensichere elektronische Schaltung 7' angeschlossen sind. Bei diesem speziellen Ausführungsbeispiel ist die Ausgangsspannung der weiteren eigensicheren Stromversorgungseinheit 4 null, wenn die als photovoltaischer Wandler ausgebildete Stromerzeugungseinheit 6 nicht mit Licht bestrahlt wird.

Andererseits, wenn die Stromerzeugungseinheit 6 mit Licht bestrahlt wird, dann erhöht sich die Ausgangsspannung der weiteren eigensichere Stromerzeugungseinheit 4 bis Strom zur eigensicheren elektronischen Schaltung 7' der Elektronikeinheit 2 fließt. Sobald ausreichende Leistung erreicht ist, wird die Stromversorgung durch die erste eigensichere Stromversorgungseinheit 3 abgelöst. Da bei dieser Schaltung der Strom nicht zu der jeweils anderen eigensicheren Stromversorgungseinheit 3 bzw. 4 wegen der Rückschlagstromschutzfunktion gelangen kann, steht die von der weiteren eigensicheren Stromversorgungseinheit 4 erzeugte Leistung vollständig der Elektronikeinheit 2 zur Verfügung. Dementsprechend wird die Leistungsbelastung der ersten eigensicheren Stromversorgungseinheit 4 stark reduziert.

Mit Hinblick auf die Fig. 6 ist die erste eigensichere Stromversorgungseinheit 3 und die weitere eigensichere Stromversorgungseinheit 4 an eine andere eigensichere Schaltung 7" der Elektronikeinheit 2 angeschlossen. Diese umfasst eine Rückschlagstromschutzfunktion sowie auch eine Strombegrenzungs- und Spannungsbegrenzungsfunktion, wie einzeln auch in Fig. 2 dargestellt.

Die Erfindung ist nicht beschränkt auf die vorstehend beschriebenen Ausführungsformen, sondern lässt auch Änderungen zu, die mit dem Schutzbereich der nachfolgenden Ansprüche mit abgedeckt sind. So ist es beispielsweise auch möglich, weitere IS-Stromversorgungseinheiten bei Bedarf zur Stromversorgung der Elektronikeinheit eines Feldgeräts hinzuziehen oder parallel auch eine alternative Stromversorgung über einen drahtgebundenen Feldbus vorzunehmen.

### Bezugszeichenliste

- 1: Feldgerät
- 2: Elektronikeinheit
- 3: erste eigensichere Stromversorgungseinheit
- 4: weitere eigensichere Stromversorgungseinheit
- 5: Speicherelement
- 6: Stromerzeugungseinheit
- 7: eigensichere Schaltung
- 8: zweipoliger Eingang
- 9: Rückstromschutzelement
- 10: Strombegrenzungselement
- 11: Spannungsbegrenzungselement
- 12: eigensichere Schaltung
- 13: Strombegrenzungselement
- 14: Rückstromschutzelement
- 15: zweipoliger Ausgang
- 16: elektronische Schaltung
- 17: Strombegrenzungselement
- 18: Rückstromschutzelement
- 19: zweipoliger Ausgang
- 20: Steuereinheit

## Patentansprüche

1. Feldgerät (1) einer Prozessautomatisierungsanlage, mit mindestens einer ersten eigensichere Stromversorgungseinheit (3), die in einem integrierten Speicherelement (5) lokal gespeicherte elektrische Energie zur Stromversorgung einer Elektronikeinheit (2) zur Prozesssteuerung bereitstellt,
**dadurch gekennzeichnet,**
**dass** daneben mindestens eine weitere eigensichere Stromversorgungseinheit (4) integriert ist, die durch eine lokal erneuerbare elektrische Energie beieitstellende Stromerzeugungseinheit (6) gespeist ist.

2. Feldgerät (1) nach Anspruch 1,
**dadurch gekennzeichnet,**
**dass** die Stromerzeugungseinheit (6) der weiteren eigensichere Stromversorgungseinheit (4) als ein elektrothermischer oder photovoltaischer Wandler ausgebildet ist.

3. Feldgerät (1) nach Anspruch 1,
**dadurch gekennzeichnet,**
**dass** die Elektronikeinheit (2) des Feldgeräts (1) eine eigensichere elektronische Schaltung (7) aufweist, die einen Rückschlagstromschutz und/oder eine Strombegrenzung und/oder eine Spannungsbegrenzung umfasst.

4. Feldgerät (1) nach Anspruch 3,
**dadurch gekennzeichnet,**
**dass** die eigensichere elektronische Schaltung (7) mindestens zwei je zweipolige Eingänge (8a, 8b) für je eine eigensichere Stromversorgungseinheit (3, 4) aufweist, denen je ein Rückstromschutzelement (9a, 9b) zur Verhinderung eines Stromrückflusses in die nicht-explosionsgeschützte Umgebung nachgeschaltet ist und die nachfolgend zusammengeführt einem gemeinsamen Strombegrenzungselement (10) sowie Spannungsbegrenzungselement (11) zugehen, um schließlich über einen zweipoligen Ausgang der restlichen Elektronikeinheit (2) zur Verfügung zu stehen.

5. Feldgerät (1) nach Anspruch 1,
**dadurch gekennzeichnet,**
**dass** die das Speicherelement (5) aufweisende erste IS-Stromversorgungseinheit (3) weiterhin eine eigene eigensichere elektronische Schaltung (12) aufweist, die einen Rückschlagstromschutz und/oder eine Strombegrenzung und/oder eine Spannungsbegrenzung umfasst sowie einen zweipoligen Ausgang (15) zur Verbindung mit dem korrespondierenden Eingang (8a) der Elektronikeinheit (2).

6. Feldgerät (1) nach Anspruch 5,
**dadurch gekennzeichnet,**
**dass** die eigensichere Schaltung (12) ein mit dem Speicherelement (5) in Reihe geschaltetes Stromgebrenzungselement (13) und ein Rückstromschutzelement (14) zum Ausgang (15) hin umfasst.

7. Feldgerät (1) nach Anspruch 1,
**dadurch gekennzeichnet,**
**dass** die die lokal erneuerbare elektrische Energie bereitstellende weitere eigensichere Stromversorgungseinheit (4) eine elektronische Schaltung (16) zur Steuerung der Ausgangsspannung umfasst, um diese abhängig von der erzeugbaren Leistung der eigensicheren Stromerzeugungseinheit (4) anzupassen.

8. Feldgerät (1) nach Anspruch 7,
**dadurch gekennzeichnet,**
**dass** die Schaltung (16) ein mit der Stromerzeugungseinheit (6) in Reihe geschaltetes Stromgebrenzungselement (17) und ein Rückstromschutzelement (18) zum Ausgang (19) hin umfasst sowie eine Steuereinheit (20) zur Anpassung der von der Stromerzeugungseinheit (6) erzeugten Energie an die Lastleistung der nachfolgenden Schaltung (7) der Elektronikeinheit (2).

9. Feldgerät (1) nach einem der vorstehenden Ansprüche,
**dadurch gekennzeichnet,**
**dass** elektrische Umschaltmittel vorgesehen sind, die während des normalen Betriebs die weitere eigensichere Stromversorgungseinheit (4) in Priorität vor der ersten eigensichere Stromversorgungseinheit (3) auf die Elektronikeinheit (2) aufschalten.

10. Feldgerät (1) nach einem der vorstehenden Ansprüche,
**dadurch gekennzeichnet,**
**dass** das Speicherelement (5) der mindestens einen ersten eigensichere Stromversorgungseinheit (3) austauschbar im Feldgerät (1) untergebracht ist, wobei während eines Austauschs die weitere eigensichere Stromversorgungseinheit (4) die Stromversorgung der Elektronikeinheit (2) überbrückend übernimmt.
